# EUROPEAN PATENT SPECIFICATION

(11) **EP 3 879 033 B1**
(45) Date of publication and mention of the grant of the patent: **04.10.2023**
(21) Application number: 21151996.2
(22) Date of filing: 18.01.2021
(51) Int. Cl.: E01D 11/00, E01D 19/16, D07B 1/14, C09K 11/02

(54) **SELF-ILLUMINATED CABLES**
SELBSTLEUCHTENDE KABEL
CÂBLES À ÉCLAIRAGE AUTONOME

(30) Priority: 10.03.2020 EP 20162132
(43) Date of publication of application: 15.09.2021
(73) Proprietor: BBR VT International Ltd., 8603 Schwerzenbach (CH)
(72) Inventor: Manshadi, Behzad Dehghan, 8053 Zürich (CH); Caballero Jurado, Antonio, 8604 Volketswil (CH); Fan, Haifeng, 8117 Fällanden (CH)
(74) Representative: Hepp Wenger Ryffel AG

(56) References cited:
- WO-A1-2018/020289
- WO-A2-2010/134689
- CN-U- 202 672 035
- DE-A1- 2 442 393
- JP-A- H0 525 786
- US-A1- 2002 012 795
- US-A1- 2019 249 380

## Description

The present invention relates to a self-luminous structural cable, to a method of manufacturing such a cable, to a cable-stayed structure comprising such a cable, to a bridge comprising such cables, and to the use of such a cable for the illumination of constructions.

As more and more focus is placed on the aesthetic aspect of structures, particularly on iconic landmark structures such as bridges, they are often expected to be illuminated in darkness.

The illumination of structures such as towers, stadiums, bridges and other similar constructions is known from the state of the art. In the case of bridges, a traditional solution of illumination is to install wall-washer lights, which normally use LEDs, on bridge components like decks or towers. Alternatively or in addition, LEDs are directly integrated into the stay pipes housing the tension members in such structures.

However, LEDs have a limited service life of approximately 50'000 hours and, thus, often need to be replaced. This generates huge material and labor cost at maintenance period, as well as massive material waste. Also, LED operation is highly sensitive to temperature, with high temperatures significantly shortening the lifetime of LEDs. Since landmark structures, in particular bridges, are in many cases subjected to harsh environmental conditions and high temperatures in summer, LEDs often have a shorter lifetime than expected. Moreover, the lights can only be installed on based structures such as on the ground, bridge deck, bridge towers etc., but not directly on cables, which requires extra installation space and also special locations in order to achieve a special lighting scenario. The project distance of those LEDs is also limited; therefore, not all cables or parts of the structure can be illuminated. As LEDs also require a constant energy supply during their operation, a power supply system and power cords are required, which make the installation process cumbersome and maintenance complex. Due to this complex high-cost maintenance, the whole lightening system is often abandoned around 10 years of service.

An alternative solution developed for the illumination of structures using cables known from the state of the art is the arrangement of LEDs and other elements required for lighting between two concentric stay pipes, whereby the LEDs are located below openings in the outer of the two tubes which allow the LEDs to radiate light through them to the outside. Compared to the above-mentioned solution with wall-washer lights, this solution can create uniform lighting along the whole cable, in particular when the cable is very long. It also allows to create special lighting patterns by positioning the LEDs with different color in desired locations.

However, by installing LEDs inside a compact space, a significant amount of heat is generated in that space which can further shorten the lifetime of LEDs and also have an impact on the surrounding plastic pipes, which may have a low heat resistance. For the all-round illumination of such stay pipes, an even greater number of LEDs is required, which further exacerbates the problems associated with heat generation and the organization of transformers, cables and power supply systems within the stay pipes. The heating also leads to higher fire risk for the structure. Furthermore, the second (outer) pipe increases the diameter of the stay pipe which leads to an increased drag of wind and/or rain on the cables and generates significant stresses on the pylon. In order to take account of these increased dynamic forces, extra damping resulting in significantly increased project costs may be required. The imperfect stay pipe surface at LED locations also favors the accumulation of snow and ice, which further exacerbates the dynamic forces and also represents a danger for vehicles and bridge users in the form of falling snow and ice. JP H05 25786 A reveals a structural cable with the features of the preamble of claim 1.

It is the object of the present invention to overcome these and other disadvantages of the prior art and in particular to provide a structural cable that is self-luminous, reliable, cost-effective, compatible with existing manufacturing processes in industry and which does not require the use of any additional light sources for the illumination of structures comprising such cables, in particular cable-stayed structures such as cable-stayed bridges.

The object is achieved by a self-luminous structural cable, a method of manufacturing a self-luminous structural cable, a cable-stayed structure, a bridge and the use of a self-luminous structural cable for the illumination of constructions pursuant to the independent claims. Preferred embodiments are disclosed in the specification and the dependent claims.

Self-luminous cables are useful because they are visible in dark or under minimally-lighted conditions and do not require the use of an external source of electricity for illumination. The lack of power cords also makes the cables more visually pleasing, energy-efficient and useful in areas where an outside power source would be impractical.

The object is in particular achieved by a structural cable for constructions made in accordance with claim 1.

Structural cables are frequently used as structural elements in cable-supported structures and comprise at least one strand, preferably at least one tendon, an anchorage and optionally a deviator and a stay pipe. Examples of structural cables include pre-stressing cables, bridge stay cables, carrying cables for suspension bridges, stay cables for towers, stadiums, roofs or the like.

Equipping a structural cable with a photoluminescent layer allows the cable to emit light - after the absorption of light or other radiation - in all directions and without the need for additional power sources, special accessories or installations. Additional advantages of the cables disclosed herein include higher reliability and lower maintenance requirements. Also, the aforementioned issues associated with double-walled stay pipes housing LEDs, i.e. heat build-up and an increased contact surface for wind and/or rain, are completely avoided by the structural cables disclosed herein. Finally, the present invention constitutes an environmentally friendly and aesthetically pleasing solution with zero energy consumption during service life which is also applicable to existing stay cables without the need for changing the existing components or structure.

The term "strand" as used herein refers to a tensile element consisting of a multiplicity of essentially unidirectionally extending twisted wires, in particular of seven twisted wires.

The term "tendon" as used herein refers to a bundle of strands, in particular one to two hundred seventeen strands, which are arranged in an essentially parallel fashion.

Strands and tendons are each used to transfer structural load and/or to hold a structure in position without using piers, columns or other supports. Instead, they channel or distribute the structure's weight and the loads generated during normal everyday usage through another structural element, such as a tower which is sometimes also referred to as a pylon. The wires that make up the strands are typically made from highly fatigueresistant materials with high tensile strength, such as high-tensile steels or polymers reinforced with carbon fibers or aramid fibers. For long-span bridges with central spans in the range of 1000 meters or more, particularly carbon fiber reinforced polymer stay cables may be considered due to their low self-weight.

The strands may be exposed to the air, galvanized, embedded in a matrix, arranged inside sheaths, or combinations thereof. Preferably, each strand is arranged inside a sheath in such a way that the individual strands in a tendon do not touch.

Photoluminescent substances emit light after having absorbed visible or ultraviolet radiation or the like. The term embraces both fluorescence and phosphorescence, which differ in the duration of the afterglow of light that can be visually observed after irradiation and the shift in wavelengths of absorbed and emitted light. Phosphorescent materials may be combined with fluorophores to provide additional utility in different environmental conditions. Hence, the photoluminescent layer may emit light of a variety of colours, depending on the type of luminous substance and/or the composition of luminous substances used therein.

The required concentration of photoluminescent substances in the photoluminescent layer depends upon the degree of luminescence and duration of afterglow desired. In general, the higher the concentration of the phosphors, the brighter the luminescence and the longer the afterglow.

In one aspect not part of the invention, said photoluminescent layer is applied to the individual strands and/or to a tendon.

By applying the photoluminescent layer to individual strands the luminescence is maximized. By applying the photoluminescent layer additionally or solely on the tendon, i.e. on the lateral outer surface of the tendon formed by the strands, the illumination of the cable can be realized with a low material input and thus in a particularly cost-effective manner.

In accordance with the invention an external sheathing, in particular an assembly of sheath sections, extending over substantially the entire cable length and enclosing said strands comprises said photoluminescent layer.

External sheathing has the advantage that the outside of the resulting structural cable can readily be furnished with the photoluminescent layer. The segmentation of the external sheathing into individual sheath sections facilitates transport and assembly operations and also makes it possible to repair or replace individual sheaths as required. Examples of such external sheathing are stay pipes.

The term "stay pipe" as used herein means an elongated structure that comprises a first end, a second end and a central portion between the first end and the second end. The elongated structure may be cylindrical, prism-shaped, or exhibit another elongated shape with a circular, square, rectangular, or other polygonal cross section. The stay pipe further comprises an elongated wall that defines an interior volume in which the strands may be housed. The elongated wall also defines an exterior surface of the stay pipe. The stay pipe may be flexible or inflexible such that the stay pipe can adapt to the shape and movements of the strands during their intended use without forming any gaps or ruptures in the stay pipe.

The stay pipes may be constructed of a variety of materials and manufactured by using a variety of methods know to those in the art. Examples of materials that may be used to construct the stay pipes include polymers (including copolymers) and metals (including metal alloys). Techniques for manufacturing the stay pipes may include extrusion, metallurgical techniques, and moulding. Stay pipes may be mono-material structures or multi-layer structures of two or more materials. The stay pipes may be produced in a variety of lengths and diameters according to the use of the stay cable and depending on the respective construction.

Commonly used stay pipes are made of UV-resistant HDPE or stainless steel. The stay pipe is typically extruded either from one material as a single layer or coextruded with at least one further material to produce radially segregated multi-layer stay pipes. For example, a colored stay pipe can be produced by coextrusion of a cheaper material that forms the inner layer and a material which has the desired color and/or meets higher material requirements that forms the outer layer.

Preferably, said external sheathing comprises protrusions, preferably a substantially continuous protrusion, on its outer layer. In particular, said external sheathing comprises at least one helical rib on its outer layer.

This way, water streams flowing along the cable are effectively deviated depending on the shape of the protrusions around the sheathing. In this regard, ribs can efficiently control cable vibration and prevent instability due to the combined action of wind and rain depending on the pitch of the helix they form around the sheathing.

For example, such a double helical rib can be welded to the stay pipe.

In an alternative embodiment, the sheathing consists essentially of a photoluminescent plastic composition.

By producing the sheathing from a photoluminescent plastic composition, i.e. from a mixture of at least one thermoplastic polymer and at least one photoluminescent substance, a sheathing with bulk photoluminescent properties is obtained, which offers enhanced durability and resistance against abrasion.

Suitable thermoplastic polymers include poly(ethylene), poly(propylene), acrylonitrile butadiene styrene copolymer (ABS), polycarbonate, poly (methyl methacrylate), polystyrenes, rigid poly(vinyl chloride) and styrene acrylonitrile (SAN), which can be moulded into luminous photoluminescent polymer granules and parts.

In an alternative embodiment, the photoluminescent layer is a coating.

A photoluminescent coating can be easily and cost-effectively applied to a range of substrates, including accessible strand, tendon and sheath surfaces, using known methods, such as painting or spraying. Furthermore, the coatings can be renovated or exchanged, for example to effect a change of glow colour, upon a user's request, which leaves great flexibility for the application of the invention disclosed herein.

The material used for the coating can be a mixture of clear epoxy resin and photoluminescent material, as presented in US2013/0065058 A1, or a commercially available photoluminescent coating product. Optionally, the substrate can be primed before applying the photoluminescent coating and/or a transparent top coat can be applied to the photoluminescent coating. Preferably, the transparent top coat offers a suitable degree of abrasion resistance and contains UV absorbers to withstand the environmental influences at the place of use of the cable and to protect the photoluminescent pigments and dyes used in the coating over the entire service life of the structural cable.

Preferably, the photoluminescent layer covers less than the entire area that is visible when the cable is used as intended, preferably less than 80% of the area that is visible when the cable is used as intended, more preferably less than 60% of the area that is visible when the cable is used as intended, even more preferably less than 40% of the area that is visible when the cable is used as intended, most preferably less than 20% of the area that is visible when the cable is used as intended.

By applying the photoluminescent coating only partially to the structural cable, the creative freedom of architects and designers is increased. For example, special designs, such as geometric figures, patterns, graphics, can be illuminated while other parts of the cable are dark.

In accordance with the invention, the photoluminescent layer comprises one or more phosphorescent substances.

Phosphorescent substances feature a tremendous capacity of absorbing, storing, and emitting light, which allows for a strong glow-in-the-dark effect that can last up to several hours after exposure to the external light stimulus is cut off.

Examples of phosphorescent material along with the colours of light the materials emit include silica aluminate (green-yellow to purple-blue), strontium aluminate (green-yellow to purple-blue), aluminate with fluorescent pigment (orange), alkaline earth silicate (blue), and zinc sulfide (blue, green, red, or orange).

Preferably, the photoluminescent layer comprises one or more phosphorescent substances selected from the group consisting of silica aluminate, strontium aluminate, aluminate with fluorescent pigment, alkaline earth silicate, and zinc sulfide.

The addition of small amounts (few ppm) of a suitable activator to zinc sulfide affords particularly strong phosphorescence. When silver is used as activator, the resulting color is bright blue, with a maximum emission wavelength of 450 nanometers. Using manganese yields an orange-red color and an emission maximum at around 590 nanometers. The typical traditional phosphor is copper-activated zinc sulfide (ZnS:Cu) which has a greenish emission, depending on the copper content.

Europium-activated metal oxide aluminates containing one or several of strontium (SrAl₂O₄), calcium (CaAl₂O₄) and barium (BaAl₂O₄) are advanced phosphorescent aluminates that exhibit longer afterglow and stronger brightness than zinc sulfide. Moreover, these aluminates feature a shelf life of more than 10 years, are weather resistant, non-toxic, non-radioactive, chemically stable, and available in more than 10 colours, including yellow, green, red, blue.

In another embodiment, the photoluminescent layer comprises one or more fluorophore.

The use of fluorescent dyes in the photoluminescent layer provides a brilliant daylight appearance of the structural cables. Generally, the dyes must be suitable for use with a specific plastic. Resin compatibility information can be found in the descriptions of the dyes or can be obtained from the dye manufacturers on request. Thus, following the manufacturer's recommendations, one skilled in the art may choose the appropriate resin without undue experimentation.

Preferably, the photoluminescent layer comprises one or more fluorophore selected from the group consisting of calcite, amber, rubies, diamonds, emeralds, willemite, esperite, wollastonite, clinohedrite, hexavalent uranium, divalent manganese, trivalent chromium, trivalent lanthanides, divalent europium, tungsten-molybdenum in solid solution, sphalerite, crude oil, anthracene, stilbene, vitamin B2, tonic water, and fluorite.

These dyes withstand the high temperatures that occur during moulding and extruding in plastic manufacture, feature a good ultraviolet light stability, which makes them suitable for long-term outdoor use, and a high luminosity and high brilliance.

Preferably, the photoluminescent layer comprises at least one polymer-soluble daylight fluorescent dye and at least one phosphorescent phosphor pigment which each emit light in the visible spectrum.

The combination of a fluorescent dye and a phosphorescent pigment creates a strong, bright daytime colour without diminishing the brightness and duration of the afterglow of the phosphorescent pigments in the dark. This way, the colour of the glow-in-the-dark luminescence can take on a colour that is very similar to that of the daylight fluorescent dye. This "acquired" glow-in-the-dark colour may be entirely different from the colour of the natural luminescence of the phosphorescent pigmet and can be used to impart the structural cable with a colour in darkness which is either substantially the same or completely different from the colour perceived in daylight. This can further increase the creative freedom of artists and architects alike.

The object of the present invention is further achieved by a method of manufacturing a structural cable as claimed in claim 8.

This enables simple production of the cable according to the invention using common methods known to the person skilled in the art. The method is also suitable for equipping structural cables already in use with a photoluminescent layer without having to replace the existing stay pipes.

Preferably, the photoluminescent layer is applied to less than the entire area that is visible when the cable is used as intended, preferably to less than 80% of the area that is visible when the cable is used as intended, more preferably to less than 60% of the area that is visible when the cable is used as intended, even more preferably to less than 40% of the area that is visible when the cable is used as intended, most preferably to less than 20% of the area that is visible when the cable is used as intended.

By coating less than the entire area that is visible when the cable is used as intended with the photoluminescent material, design freedom is enhanced and the illumination of the cable is achieved at lower costs.

The object of the present invention is further achieved by a cable-stayed structure comprising at least one structural cable as disclosed herein. In particular, the cable-stayed structure is a bridge, a tower or a stadium.

Such a cable-stayed structure has self-illuminating properties and can therefore be seen in the dark without the need for additional lighting equipment. Further advantages of cable-stayed structures lie mainly in increased aerodynamic stability, reduced costs for the abutments and faster, easier construction and lightweight overall structures.

The object of the present invention is further achieved by a bridge comprising at least one tower, at least one deck and at least two structural cables as disclosed herein. In particular, the bridge is a cable-stayed bridge.

A cable-stayed bridge is a structural system with a continuous girder supported by inclined stay cables from the towers. The cable-stayed bridge is very economical and has an elegant appearance and is also highly efficient in use of materials.

In an alternative embodiment, the object of the present invention is further achieved by a stadium comprising at least one structural cable as disclosed herein.

In an alternative embodiment, the object of the present invention is further achieved by a tower comprising at least one structural cable as disclosed herein.

The object of the present invention is further achieved by the use of a structural cable as disclosed herein for the illumination of constructions, in particular bridges, especially in darkness.

The present invention is further explained in more detail by means of figures, in which the objects contained therein are not necessarily drawn to scale. Also, the following examples are not intended to be limiting, as other resins, luminous materials, quantities, combinations and designs differing from those shown may be used by one of ordinary skill in the art, without departing from the scope of the invention. Unless stated otherwise, like reference numerals are used to refer to the same or similar elements.
- Figure 1: Schematic side view of a cable-stayed structure according to the invention;
- Figure 2: Schematic 3D view of a structural cable according to the invention comprising a one-layer stay pipe;
- Figure 3: Schematic 3D view of a structural cable according to the invention comprising a multi-layer stay pipe;
- Figure 4: Schematic 3D view of another example of a structural cable according to the invention;
- Figure 5: Schematic 3D view of a further example of a structural cable according to the invention.

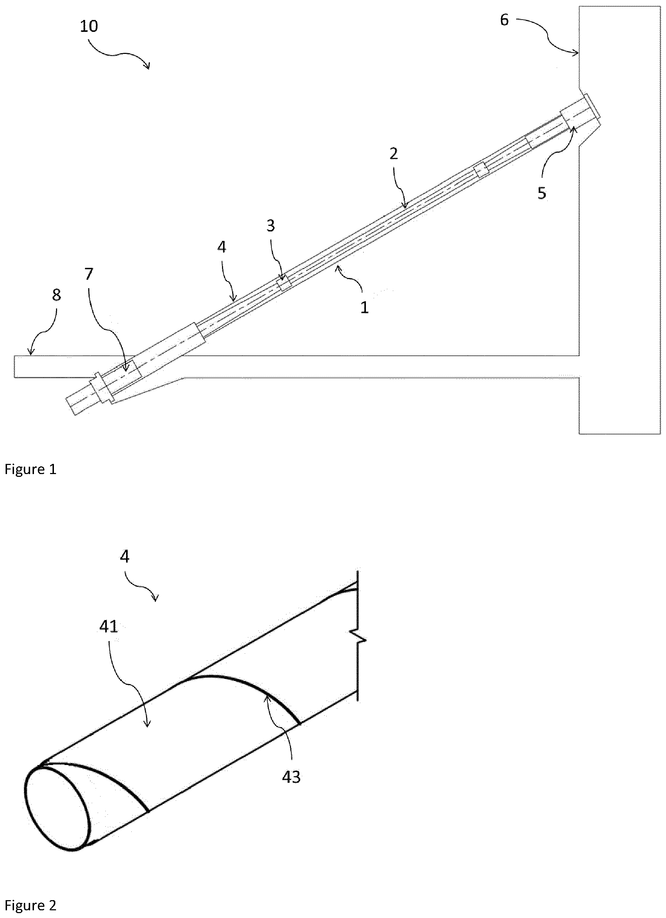

Figure 1 shows a cable-stayed structure (10) comprising a structural cable (1) according to the invention. The structural cable (1) comprises a plurality of strands (2) which are guided by deviators (3) and protected by an external sheath (4), which is a stay pipe. The first strand end is anchored in an upper anchorage (5) on the tower (6) side and the second strand end in a lower anchorage (7) located on the deck (8) side.

Figure 2 shows a schematic 3D view of a structural cable according to the invention comprising a one-layer stay pipe. The tubular body, in this case corresponding to the outer layer (41) of the stay pipe (4), was extruded from a mixture of a polymeric material, e.g. HDPE, and a photoluminescent substance. The helical rib (43) in this example is also made of plastic and was welded to the tubular body. The rib material can comprise the same photoluminescent substance used in the outer layer (41) of the stay pipe (4) and/or a different photoluminescent substance, i.e. the rib (43) can feature essentially the same or different glowing colors compared to the outer layer (41). It is also conceivable that the rib (43) is made of a material that contains no photoluminescent substance, i.e. the rib (43) does not glow in the dark.

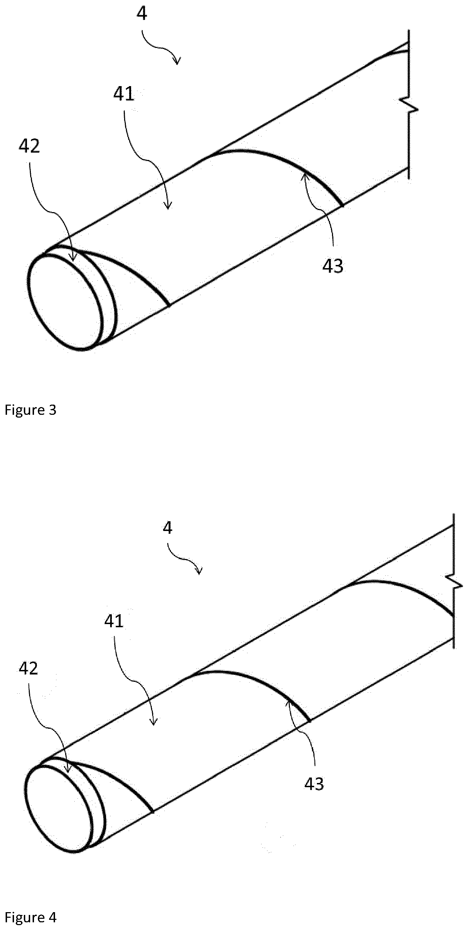

Figure 3 shows a schematic 3D view of a structural cable according to the invention comprising a multi-layer stay pipe. In this example, the tubular body of the stay pipe (4) was obtained by coextrusion of a first material that forms the inner layer (42) and a second material that forms the outer layer (41). In this example, the first material is a polymeric material such as recycled HDPE of any color and the second material is a mixture of polymeric material and a photoluminescent substance. It is, however, also conceivable that the outer layer (41) is a coating that is applied to the tubular body of the stay pipe (4) after the manufacture of said tubular body and/or that the inner layer (42) itself consists of multiple layers which have, for example, been obtained by coextrusion of multiple materials. The stay pipe (4) further comprises a helical rib (43), which is also made of plastic welded to the outer layer (41). The rib material can comprise the same photoluminescent substance used in the outer layer (41) of the stay pipe (4) and/or a different photoluminescent substance, i.e. the rib (43) can feature essentially the same or different glowing colors compared to the outer layer (41). It is also conceivable that the rib (43) is made of a material that contains no photoluminescent substance, i.e. the rib (43) does not glow in the dark.

Figure 4 shows a schematic 3D view of another example of a structural cable according to the invention. In this example, both the inner layer (42) and the outer layer (41) of the stay pipe (4) are made of coextruded materials, e.g. polymers such as HDPE, while only the ribs (43) are made of a mixed material comprising photoluminescent material. In this example, the protruding ribs (43) are arranged helically around the stay pipe comprising the inner (42) and the outer (41) layers. Again, different glowing colors are available for the ribs (43). It is also conceivable that the tubular body of the stay pipe (4) consists only of a single layer of material.

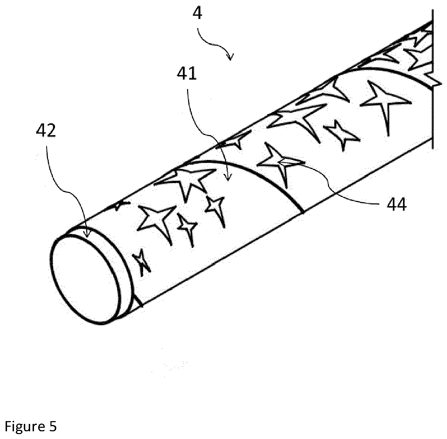

Figure 5 shows a schematic 3D view of a structural cable according to yet another embodiment of the invention, wherein the first (inner) layer (42) and second (outer) layer (41) of the stay pipe are made of conventional materials such as metals or plastics. It is also conceivable that the tubular body of the stay pipe (4) consists only of a single layer of material. A photoluminescent coating in the form of star-shaped graphics (44) is painted on the outer surface (41). It will be understood for a person skilled in the art that this method can be applied to both new and existing stay pipes and that, for example by using suitable templates or masking, all kinds of designs as well as surface coatings can be realized.

## Claims

1. Structural cable (1) for constructions, in particular stay cable for a cable-stayed bridge, the cable comprising at least one strand (2), preferably at least one tendon, and a photoluminescent layer, wherein said layer is visible during the intended use of said cable and wherein an external sheathing, in particular an assembly of sheath sections, extending over substantially the entire cable length and enclosing said at least one strand comprises said photoluminescent layer, **characterised in that** the photoluminescent layer comprises one or more phosphorescent substances, in particular one or more phosphorescent substances selected from the group consisting of silica aluminate, strontium aluminate, aluminate with fluorescent pigment, alkaline earth silicate, and zinc sulfide.

2. The cable according to any of the preceding claims, wherein said external sheathing comprises protrusions, preferably a substantially continuous protrusion, in particular at least one helical rib, on its outer layer.

3. The cable according to any of the preceding claims, wherein said sheathing consists essentially of a photoluminescent plastic composition.

4. The cable according to any one of the preceding claims, wherein said layer is a coating.

5. The cable according to any one of the preceding claims, wherein said layer covers less than the entire area that is visible when the cable is used as intended, preferably less than 80% of the area that is visible when the cable is used as intended, more preferably less than 60% of the area that is visible when the cable is used as intended, even more preferably less than 40% of the area that is visible when the cable is used as intended, most preferably less than 20% of the area that is visible when the cable is used as intended.

6. The cable according to any one of the preceding claims, wherein the photoluminescent layer comprises one or more fluorophore, in particular one or more fluorophore selected from the group consisting of calcite, amber, rubies, diamonds, emeralds, willemite, esperite, wollastonite, clinohedrite, hexavalent uranium, divalent manganese, trivalent chromium, trivalent lanthanides, divalent europium, tungsten-molybdenum in solid solution, sphalerite, crude oil, anthracene, stilbene, vitamin B2, tonic water, and fluorite.

7. The cable according to any one of the preceding claims, wherein the photoluminescent layer comprises at least one polymer-soluble daylight fluorescent dye and at least one phosphorescent phosphor pigment which each emit light in the visible spectrum.

8. A method of manufacturing a structural cable according to any one of claims 1 to 7 comprising the steps of:
- Providing at least one strand and/or a tendon and/or an external sheathing;
- Applying a photoluminescent layer to the strand and/or tendon and/or the sheathing, in particular to the area of the structural cable that is visible when the cable is used as intended;
- Optionally, applying a transparent top coat on the photoluminescent layer.

9. The method according to claim 8, wherein the layer is applied to less than the entire area that is visible when the cable is used as intended, preferably to less than 80% of the area that is visible when the cable is used as intended, more preferably to less than 60% of the area that is visible when the cable is used as intended, even more preferably to less than 40% of the area that is visible when the cable is used as intended, most preferably to less than 20% of the area that is visible when the cable is used as intended.

10. A cable-stayed structure, in particular a bridge, a tower οr a stadium, comprising at least one structural cable according to any one of claims 1 to 7.

11. A bridge, in particular a cable-stayed bridge, **characterized in that** the bridge comprises at least one tower, at least one deck and at least two cables according to any one of claims 1 to 7.

12. Use of a structural cable according to any one of claims 1 to 7 for the illumination of constructions, in particular bridges, especially in darkness.

## Patentansprüche

1. Tragseil (1) für Bauwerke, insbesondere Schrägseil für eine Schrägseilbrücke, wobei das Seil mindestens eine Litze (2), vorzugsweise mindestens ein Seilglied, und eine photolumineszierende Schicht aufweist, wobei die Schicht während der bestimmungsgemäßen Verwendung des Seils sichtbar ist und wobei eine äußere Ummantelung, insbesondere eine Anordnung von Mantelabschnitten, die sich im Wesentlichen über die gesamte Kabellänge erstreckt und die mindestens eine Litze umschließt, die photolumineszente Schicht umfasst, **dadurch gekennzeichnet, dass** die photolumineszente Schicht eine oder mehrere phosphoreszierende Substanzen umfasst, insbesondere eine oder mehrere phosphoreszierende Substanzen, die aus der Gruppe ausgewählt sind, die aus Siliziumdioxidaluminat, Strontiumaluminat, Aluminat mit fluoreszierendem Pigment, Erdalkalisilikat und Zinksulfid besteht.

2. Tragseil nach einem der vorhergehenden Ansprüche, wobei die äußere Umhüllung auf ihrer Außenschicht Vorsprünge, vorzugsweise einen im wesentlichen durchgehenden Vorsprung, insbesondere mindestens eine spiralförmige Rippe, aufweist.

3. Tragseil nach einem der vorhergehenden Ansprüche, wobei die Ummantelung im Wesentlichen aus einer photolumineszenten Kunststoffzusammensetzung besteht.

4. Tragseil nach einem der vorangehenden Ansprüche, **dadurch gekennzeichnet, dass** die Schicht eine Beschichtung ist.

5. Tragseil nach einem der vorhergehenden Ansprüche, wobei die Schicht weniger als die gesamte Fläche bedeckt, die bei bestimmungsgemäßer Verwendung des Kabels sichtbar ist, vorzugsweise weniger als 80 % der Fläche, die bei bestimmungsgemäßer Verwendung des Kabels sichtbar ist, weiter bevorzugt weniger als 60 % der Fläche, die bei bestimmungsgemä-βer Verwendung des Kabels sichtbar ist, noch weiter bevorzugt weniger als 40 % der Fläche, die bei bestimmungsgemä-βer Verwendung des Kabels sichtbar ist, am meisten bevorzugt weniger als 20 % der Fläche, die bei bestimmungsgemä-βer Verwendung des Kabels sichtbar ist.

6. Tragseil nach einem der vorhergehenden Ansprüche, wobei die photolumineszente Schicht einen oder mehrere Fluorophore umfasst, insbesondere einen oder mehrere Fluorophore, die aus der Gruppe ausgewählt sind, die aus Calcit, Bernstein, Rubinen, Diamanten, Smaragden, Willemite, Esperit, Wollastonit, Clinohe-drit, sechswertigem Uran, zweiwertigem Mangan, dreiwertigem Chrom, dreiwertigen Lanthaniden, zweiwertigem Europium, Wolfram-Molybdän in fester Lösung, Sphalerit, Rohöl, Anthracen, Stilben, Vitamin B2, Tonic Water und Fluorit.

7. Tragseil nach einem der vorhergehenden Ansprüche, wobei die photolumineszente Schicht mindestens einen polymerlöslichen Tageslichtfluoreszenzfarbstoff und mindestens ein phosphoreszierendes Leuchtstoffpigment umfasst, die jeweils Licht im sichtbaren Spektrum emittieren.

8. Verfahren zur Herstellung eines Tragseiles nach einem der Ansprüche 1 bis 7, umfassend die folgenden Schritte:
- Bereitstellen mindestens einer Litze und/oder eines Seilglieds und/oder einer äußeren Ummantelung;
- Aufbringen einer photolumineszenten Schicht auf die Litze und/oder das Seilglied und/oder die Ummantelung, insbesondere auf den Bereich des Tragseils, der bei bestimmungsgemäßem Gebrauch des Seils sichtbar ist;
- Wahlweise Aufbringen einer transparenten Deckschicht auf die photolumineszente Schicht.

9. Verfahren nach Anspruch 8, wobei die Schicht auf weniger als die gesamte Fläche aufgebracht wird, die bei bestimmungsgemäßer Verwendung des Kabels sichtbar ist, vorzugsweise auf weniger als 80 % der Fläche, die bei bestimmungsgemäßer Verwendung des Seiles sichtbar ist, weiter bevorzugt auf weniger als 60 % der Fläche, die bei bestimmungsgemäßer Verwendung des Seiles sichtbar ist, noch weiter bevorzugt auf weniger als 40 % der Fläche, die bei bestimmungsgemäßer Verwendung des Seiles sichtbar ist, am meisten bevorzugt auf weniger als 20 % der Fläche, die bei bestimmungsgemäßer Verwendung des Seiles sichtbar ist.

10. Schrägseilkonstruktion, insbesondere eine Brücke, ein Turm oder ein Stadion, mit mindestens einem Tragseil nach einem der Ansprüche 1 bis 7.

11. Brücke, insbesondere Schrägseilbrücke, **dadurch gekennzeichnet, dass** die Brücke mindestens einen Turm, mindestens ein Deck und mindestens zwei Kabel nach einem der Ansprüche 1 bis 7 aufweist.

12. Verwendung eines Tragseils nach einem der Ansprüche 1 bis 7 zur Beleuchtung von Bauwerken, insbesondere von Brücken, insbesondere bei Dunkelheit.

## Revendications

1. Câble de structure (1) pour constructions, en particulier câble de haubanage pour pont à haubans, le câble comprenant au moins un toron (2), de préférence au moins un tendon, et une couche photoluminescente, dans lequel ladite couche est visible lors de l'utilisation prévue dudit câble et dans lequel une gaine extérieure, en particulier un assemblage de sections de gaine, s'étendant sur sensiblement toute la longueur du câble et enserrant ledit au moins un toron, comprend ladite couche photoluminescente, **caractérisé en ce que** ladite couche comprend une ou plusieurs couches phosphorescentes, s'étendant sur pratiquement toute la longueur du câble et entourant ledit au moins un toron comprend ladite couche photoluminescente, **caractérisée en ce que** la couche photoluminescente comprend une ou plusieurs substances phosphorescentes, en particulier une ou plusieurs substances phosphorescentes choisies dans le groupe constitué par l'aluminate de silice, l'aluminate de strontium, l'aluminate avec pigment fluorescent, le silicate alcalino-terreux, et le sulfure de zinc.

2. Câble selon l'une quelconque des revendications précédentes, dans lequel ladite gaine externe comprend des protubérances, de préférence une protubérance sensiblement continue, en particulier au moins une nervure hélicoïdale, sur sa couche externe.

3. Le câble selon l'une quelconque des revendications précédentes, dans lequel ladite gaine est constituée essentiellement d'une composition plastique photoluminescente.

4. Le câble selon l'une quelconque des revendications précédentes, dans lequel ladite couche est un revêtement.

5. Le câble selon l'une quelconque des revendications précédentes, dans lequel ladite couche couvre moins de la totalité de la zone visible lorsque le câble est utilisé comme prévu, de préférence moins de 80% de la zone visible lorsque le câble est utilisé comme prévu, plus préférentiellement moins de 60% de la zone visible lorsque le câble est utilisé comme prévu, encore plus préférentiellement moins de 40% de la zone visible lorsque le câble est utilisé comme prévu, le plus préférentiellement moins de 20% de la zone visible lorsque le câble est utilisé comme in-tendu.

6. Câble selon l'une quelconque des revendications précédentes, dans lequel la couche photoluminescente comprend un ou plusieurs fluorophore, en particulier un ou plusieurs fluorophore choisi dans le groupe constitué par la calcite, l'ambre, les rubis, les dia-mants, les émeraudes, la willemite, esperite, wollastonite, clinohe-drite, uranium hexavalent, manganèse divalent, chrome trivalent, lanthanides trivalents, europium divalent, tung-stène-molybdène en solution solide, sphalérite, pétrole brut, anthracène, stil-bène, vitamine B2, eau tonique et fluorine.

7. Câble selon l'une quelconque des revendications précédentes, dans lequel la couche photoluminescente comprend au moins un colorant fluorescent de lumière du jour soluble dans un polymère et au moins un pigment phosphorescent qui émettent chacun de la lumière dans le spectre visible.

8. Procédé de fabrication d'un câble structurel selon l'une quelconque des revendications 1 à 7 comprenant les étapes suivantes :
- Fournir au moins un toron et/ou un tendon et/ou une gaine externe ;
- Application d'une couche photoluminescente sur le toron et/ou le tendon et/ou la gaine, en particulier sur la zone du câble structurel qui est visible lorsque le câble est utilisé comme prévu ;
- éventuellement, application d'une couche de finition transparente sur la couche photoluminescente.

9. Procédé selon la revendication 8, dans lequel la couche est ap-pliée à moins de la totalité de la zone qui est visible lorsque le câble est utilisé comme prévu, de préférence à moins de 80% de la zone qui est visible lorsque le câble est utilisé comme prévu, plus préférentiellement à moins de 60% de la zone qui est visible lorsque le câble est utilisé comme prévu, encore plus préférentiellement à moins de 40% de la zone qui est visible lorsque le câble est utilisé comme prévu, très préférentiellement à moins de 20% de la zone qui est visible lorsque le câble est utilisé comme prévu.

10. Structure haubanée, notamment un pont, une tour ou un stade, comprenant au moins un câble structurel selon l'une quelconque des revendications 1 à 7.

11. Pont, en particulier pont à haubans, **caractérisé en ce que** le pont comprend au moins une tour, au moins un tablier et au moins deux câbles selon l'une quelconque des revendications 1 à 7.

12. Utilisation d'un câble structurel selon l'une quelconque des revendications 1 à 7 pour l'éclairage de constructions, en particulier de ponts, notamment dans l'obscurité.
